# EUROPÄISCHE PATENTANMELDUNG

(11) **EP 0 581 322 A2**
(43) Veröffentlichungstag der Anmeldung: **02.02.1994**
(21) Anmeldenummer: 93112312.9
(22) Anmeldetag: 31.07.1993
(51) Int. Cl.: H02M 1/12, H02M 7/48

(54) **Verfahren zur Dämpfung von Netzoberschwingungen und eine Netzkupplung**

(30) Priorität: 31.07.1992 DE 4225269
(71) Anmelder: ASEA BROWN BOVERI AG, CH-5401 Baden (CH)
(72) Erfinder: Dähler, Peter, CH-5236 Remigen (CH); Häusler, Michael, Dr., D-69469 Weinheim (DE)
(74) Vertreter: Rzehak, Herbert

(57) **Zusammenfassung**

Über einen Umrichter mit einem Gleichspannungszwischenkreis (3) kann elektrische Energie aus einem 50-Hz-Landesnetz (7) in ein 16 2/3-Hz-Bahnnetzes (1) und umgekehrt übertragen werden. Ein Sonderfall ist der Betrieb eines Stromrichters mit eingeprägter Gleichspannung ohne Übertragung von Wirkleistung. Hier wird ein Gleichspannungszwischenkreis (3) durch einen Zwischenkreiskondensator (C1, C2) und ggf. durch ein Hochpassfilter (4) abgeschlossen. Umrichter mit eingeprägter Gleichspannung erzeugen eine Wechselspannung durch abschnittsweises Umschalten der Gleichspannung an der wechselstromseitigen Last bzw. an einem wechselstromseitigen Netzanschluss (1). Die von Teilstromrichtern (ST1 - ST3) des Umrichters erzeugte, gegenseitig phasenverschobene Wechselspannung wird über in Reihe geschaltete Teiltransformatoren (Tr1 - Tr3) ins Bahnnetzes (1) eingespeist. Um störende, beim Takten der Teilstromrichter (ST1 - ST3) entstehende Oberschwingungen zu reduzieren, müssen die durch die Teilstromrichter (ST1 - ST3) erzeugten, rechteckförmigen Teilspannungen zu einer Treppenform in den Teiltransformatoren (Tr1 - Tr3) so addiert werden, dass die Treppenform möglichst gut einer gewünschten Sinusform entspricht. Um dies zu erreichen, sind Spannungsübersetzungen der Teiltransformatoren (Tr1 - Tr3) so abgestuft, dass die resultierenden Sprünge in der Gesamt- bzw. Summenspannung proportional zu cos αᵢ sind, wobei αᵢ eine Phasenverschiebung eines i. Spannungssprunges bezogen auf den spannungsnulldurchgang bedeutet.

## Beschreibung

### TECHNISCHES GEBIET

Bei der Erfindung wird ausgegangen von 2 Verfahren zur Dämpfung mindestens einer Spannungsoberschwingung bzw. einer Oberschwingung zur Netzfrequenz in einem Wechselspannungsnetz nach dem Oberbegriff der Patentansprüche 1 und 6 sowie von einem statischen Kompensator bzw. von einer Netzkupplung zur Durchführung des Verfahrens nach Anspruch 1.

### STAND DER TECHNIK

Mit dem Oberbegriff der Patentansprüche 1, 6 und 7 nimmt die Erfindung auf einen Stand der Technik Bezug, wie er aus der DE-A1-1 438 651 bekannt ist. Dort sind mehrere in Reihe geschaltete Teiltransformatoren an ein 3phasiges Wechselspannungsnetz angeschlossen, wobei ein Teiltransformator ein Übersetzungsverhältnis von netzseitiger Transformatorwicklung zu stromrichterseitiger Transformatorwicklung aufweist, die gleich dem √3fachen der Spannungsübersetzung mindestens eines anderen Teiltransformators ist. Die Stufenhöhen in der Summenspannung sind einer Sinuskurve angenähert, wobei die Summenfläche von unterhalb der Sinuskurve liegenden Stufenflächen wenigstens annähernd gleich der Summenfläche von Stufenflächen oberhalb der Sinuskurve ist.

In der EP-B1-0 254 911 ist ein Umrichter mit einer bahnnetzseitigen Stromrichterschaltung beschrieben, welche über einen Spannungssummiertransformator mit 13 magnetisch entkoppelten Teiltransformatoren mit einem Bahnnetz in Wirkverbindung steht. Die netzseitigen Wicklungen der Teiltransformatoren sind in Reihe geschaltet, während die stromrichterseitigen Wicklungen jeweils mit einem Stromrichter in Wirkverbindung stehen. Jeder Stromrichter, der aus einer einphasigen Brückenschaltung mit je einem GTO-Thyristor und dazu antiparalleler Diode je Brückenzweig besteht, weist parallel zu seinem Wechselstromanschluss einen Thyristor-Wechseltromschalter auf.

Derartige Umrichter mit eingeprägter Spannung erzeugen eine Wechselspannung durch abschnittsweises Umschalten der Gleichspannung an der wechselstromseitigen Last bzw. am wechselstromseitigen Netzanschluss. Die von den Stromrichtern erzeugte Spannung enthält störende Spannungsoberschwingungen. Durch die vielen wechselstromseitig in Reihe geschalteten Teilstromrichter, die versetzte Rechteckspannungen liefern, wird insgesamt eine sinusförmige Spannung angenähert. Nachteilig ist dabei die Unterteilung in viele kleine Einheiten, was insbesondere hohe Kosten für die Stromrichtertransformatoren verursacht, erhöhten Platzaufwand bedeutet und die Zuverlässigkeit der Gesamtanlage reduziert.

Zum einschlägigen Stand der Technik wird zusätzlich auf die DE-A1-4 037 531 verwiesen, aus der ein Verfahren zur Steuerung von Gleichrichtern bekannt ist, bei dem 2 Gleichrichter bzw. 4Quadrantensteller, die bahnnetzseitig an separate Sekundärwicklungen eines Netztransformators angeschlossen sind, phasenverschoben getaktet werden, um beim Takten entstehende Oberschwingungen zu reduzieren. Für den Gleichspannungszwischenkreis des Umrichters wird eine 3Punktschaltung verwendet.

### DARSTELLUNG DER ERFINDUNG

Die Erfindung, wie sie in den Patentansprüchen 1, 6 und 7 definiert ist, löst die Aufgabe, 2 Verfahren zur Dämpfung mindestens einer Oberschwingung zur Netzfrequenz in einem Wechselspannungsnetz sowie einen statischen Kompensator bzw. eine Netzkupplung zur Durchführung des Verfahrens nach Anspruch 1 der eingangs genannten Art derart weiterzuentwickeln, dass eine Oberschwingungsdämpfung mit einfacheren Mitteln möglich wird.

Ein Vorteil der Erfindung besteht darin, dass sich die Kosten und der Platzbedarf vermindern. Gleichzeitig wird eine höhere Zuverlässigkeit der Netzkupplung erreicht.

### KURZE BESCHREIBUNG DER ZEICHNUNGEN

Die Erfindung wird nachstehend anhand von Ausführungsbeispielen erläutert. Es zeigen:
- Fig. 1: einen Umrichter, der ein Bahnnetz mit einem Landesnetz kuppelt und bahnnetzseitig eine Netzkupplung mit 3 in Reihe geschalteten Transformatoren aufweist, an welche je ein Stromrichter bzw. Teilstromrichter angeschlossen ist,
- Fig. 2: eine Prinzipschaltung eines Stromrichters gemäss Fig. 1,
- Fig. 3a - 3c: Spannungssignaldiagramme 3er bahnnetzseitiger Teiltransformatoren gemäss Fig. 1,
- Fig. 3d: ein Signaldiagramm der Summe der 3 Signaldiagramme gemäss den Fig. 3a - 3c,
- Fig. 4: ein Vektorsignaldiagramm der Spannungszeiger der 3 Teiltransformatoren,
- Fig. 5a - 5d: Zündimpulsmuster einer 2phasigen Brückenschaltung ohne Nullpunktdioden,
- Fig. 6a - 6c: Spannungssignaldiagramme 3er Teiltransformatoren eines 1. Stromrichtersystems ohne Nullpunktdioden,
- Fig. 6d - 6f: Spannungssignaldiagramme 3er Teiltransformatoren eines 2. Stromrichtersystems ohne Nullpunktdioden, das gegenüber dem 1. Teilstromrichtersystem um 15°el. phasenverschoben ist,
- Fig. 7a - 7c: Spannungssignaldiagramme 3er Teiltransformatoren, die mit Teilstromrichtern mit Nullpunktdioden in Verbindung stehen,
- Fig. 8a - 8h: Zündimpulsmuster einer 2phasigen Stromrichterbrücke mit Nullpunktdioden,
- Fig. 9: ein durch Computersimulation erzeugtes Spannungssignaldiagramm für einen 1phasigen GTO-Umrichter in 3Punktschaltung mit 5 Spannungsstufen,
- Fig. 10: ein durch Computersimulation erzeugtes Spannungssignaldiagramm für einen 1phasigen GTO-Umrichter in 2Punktschaltung mit 3 Spannungsstufen,
- Fig. 11: eine Stromrichterschaltung mit 2 in Reihe geschalteten Transformatoren und 2 Stromrichtern in 2Punktschaltung,
- Fig. 12a und 12b: Spannungssignaldiagramme 2er Teiltransformatoren, die mit Teilstromrichtern in 2Punktschaltung in Verbindung stehen und unterschiedliche Übersetzungen aufweisen,
- Fig. 13a und 13b: Spannungssignaldiagramme 2er Teiltransformatoren, die mit Teilstromrichtern in 3Punktschaltung in Verbindung stehen und gleiche Übersetzungen aufweisen,

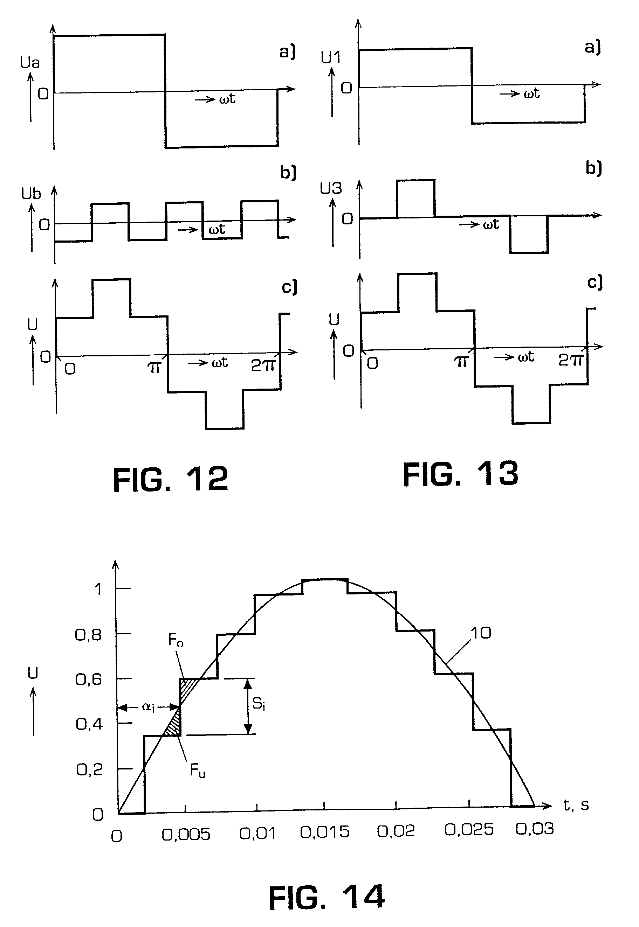

- Fig. 12c und 13c: Summensignaldiagramme zu den Spannungssignaldiagrammen von Fig. 12a und 12b bzw. 13a und 13b und
- Fig. 14: ein Spannungssignaldiagramm mit einer optimalen Treppenkurve von Spannungsstufen.

### WEGE ZUR AUSFÜHRUNG DER ERFINDUNG

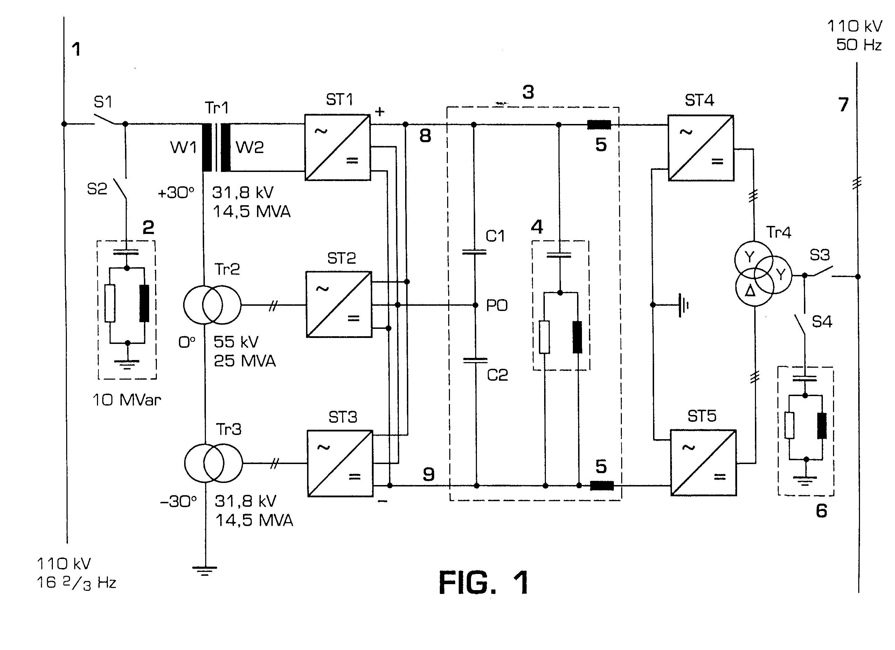

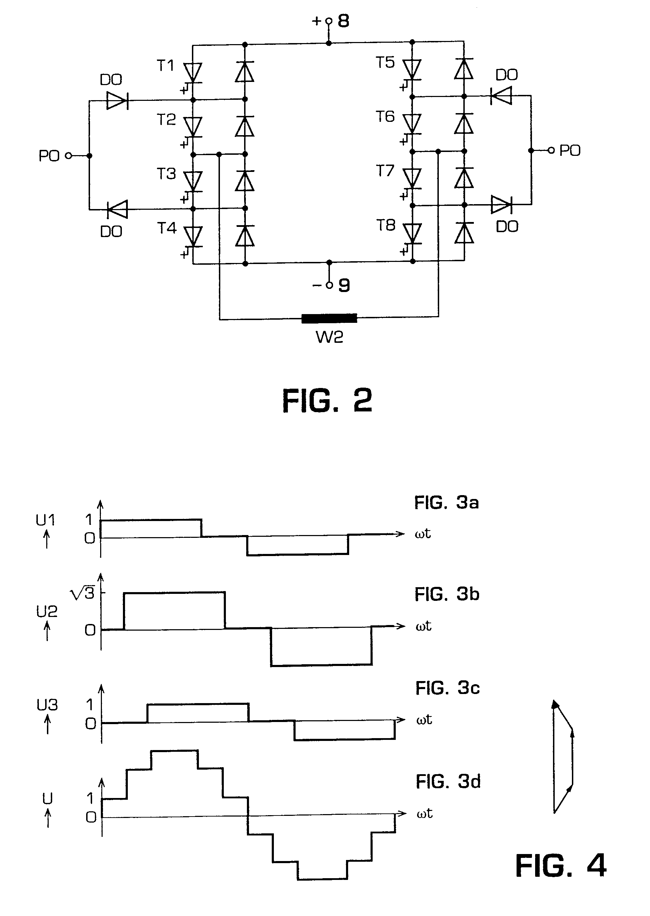

In Fig. 1 ist mit (1) ein einphasiges 16 2/3-Hz-Bahnnetz bzw. 1Phasennetz bzw. Wechselstromnetz mit einer Wechselspannung von 110 kV und mit 7 ein 3phasiges 50-Hz-Landesnetz bzw. 3Phasennetz mit einer Wechselspannung von 110 kV bezeichnet. Das Bahnnetz (1) ist über einen Schalter (S1) mit einem Spannungssummiertransformator verbunden, der aus 3 Teiltransformatoren (Tr1 - Tr3) besteht, die magnetisch nicht miteinander gekoppelte Transformatorkerne haben. Jeder Teiltransformator (Tr1 - Tr3) besitzt eine netzseitige Transformatorwicklung (W1) und eine stromrichterseitige Transformatorwicklung (W2). Die netzseitigen Transformatorwicklungen (W1) sind in Reihe geschaltet und endseitig geerdet. Jede stromrichterseitige Transformatorwicklung (W2) ist über Wechselspannungsanschlüsse an einen separaten 4Quadrantensteller bzw. Stromrichter bzw. Teilstromrichter (ST1 - ST3) angeschlossen, dessen Schaltung in Fig. 2 dargestellt ist. Jeder der 3 Teiltransformatoren (Tr1 - Tr3) besitzt eine Kurzschlussspannung von 20 %. Die Teiltransformatoren (TR1) und (Tr3) sind für eine Leistung von 14,5 MVA und für einen Spannungsabfall von 31,8 kV ausgelegt, während der Teiltransformator (TR2) für eine Leistung von 25 MVA und einen Spannungsabfall von 55 kV ausgelegt ist. Die Teilstromrichter (ST1 - ST3) und die zugehörigen Teiltransformatoren (Tr1 - Tr3) werden mit unterschiedlichen Phasendrehungen bzw. Phasenverschiebungen der Stromrichterspannungen betrieben, und zwar mit einer Phasendrehung von +30°el. bzw. 0°el. bzw. -30°el.

Die 3 Teilstromrichter (ST1 - ST3) sind in 3Punktschaltung ausgeführt und gleichspannungsseitig parallelgeschaltet, wobei ein Pluspol mit (8), ein Minuspol mit (9) und ein Nullpol mit (PO) bezeichnet sind. Die Teilstromrichter (ST1 - ST3) sind über einen Gleichspannungszwischenkreis (3) mit 2 gleichspannungsseitig in Reihe geschalteten Stromrichtern (ST4, ST5) verbunden, die wechselspannungsseitig über einen 3Wicklungstransformator bzw. Netztransformator (TR4) und einen Schalter (S4) mit dem Landesnetz (7) in Verbindung stehen. In dieser Schaltung kann elektrische Energie aus dem Landesnetz (7) über den Gleichspannungszwischenkreis (3) in das Bahnnetz (1) übertragen werden. Im Prinzip ist auch eine Energieübertragung in entgegengesetzter Richtung möglich.

Der Gleichspannungszwischenkreis (3) weist in jeder Gleichspannungsleitung (8, 9) eine Zwischenkreisdrossel (5) auf, ferner 2 in Reihe geschaltete Zwischenkreiskondensatoren (C1, C2), deren gemeinsame Verbindungsleitung an den Nullpol (P0) der Teilstromrichter (ST1 - ST3) angeschlossen ist, und ein Hochpassfilter (4), das auf die 2. Oberschwingung des Bahnnetzes (1), d. h. auf 33 1/3 Hz, abgestimmt und für eine Blindleistung von 15 MVar ausgelegt ist. Falls nur eine Zwischenkreisdrossel (5) vorgesehen ist, darf der Nullpol (P0) nicht geerdet sein.

Netzseitig sind über Schalter (S2) und (S3) Hochpassfilter (2) bzw. (6) an die Zuleitungen zu den jeweiligen Netztransformatoren angeschlossen, welche auf die 12. Oberschwingung des jeweiligen Stromnetzes (1) bzw (7) abgestimmt und für eine Blindleistung von 10 MVar bzw. 15 MVar ausgelegt sind; sie dämpfen die 11. und 13. Oberschwingung.

Fig. 2 zeigt den Aufbau eines der gleich ausgeführten 1phasigen Teilstromrichter (ST1 - ST3). Der dargestellte 4Quadrantensteller weist 4 Brückenzweige mit je 2 in Reihe geschalteten GTO-Thyristoren (T1, T2) bzw. (T3, T4) bzw. (T5, T6) bzw. (T7, T8) auf, wobei antiparallel zu jedem GTO-Thyristor ein Diode geschaltet ist. Die Verbindungsleitungen der GTO-Thyristoren (T2) und (T3) sowie der GTO-Thyristoren (T6) und (T7) bilden die Wechselspannungseingänge des 4Quadrantenstellers, die mit der stromrichterseitigen Transformatorwicklung (W2) verbunden sind. Die Verbindungsleitungen der GTO-Thyristoren (T1) und (T2) sowie diejenigen der GTO-Thyristoren (T5) und (T6) sind mit der Kathode je einer Nullpunktdiode (D0) verbunden, welche anodenseitig mit dem Nullpol (P0) in Verbindung steht. Die Verbindungsleitungen der GTO-Thyristoren (T3) und (T4) sowie diejenigen der GTO-Thyristoren (T7) und (T8) sind jeweils mit der Anode je einer Nullpunktdiode (D0) verbunden, welche kathodenseitig mit dem Nullpol (P0) in Verbindung steht.

Wichtig für das Zustandekommen der gewünschten Oberschwingungsreduktion ist das Übersetzungsverhältnis der Teiltransformatoren (Tr1 - Tr3). Hierbei liefert der Teiltransformator (Tr2) eine √3fache netzseitige Spannung im Vergleich zu den netzseitigen Spannungen der Teiltransformatoren (Tr1, Tr3).

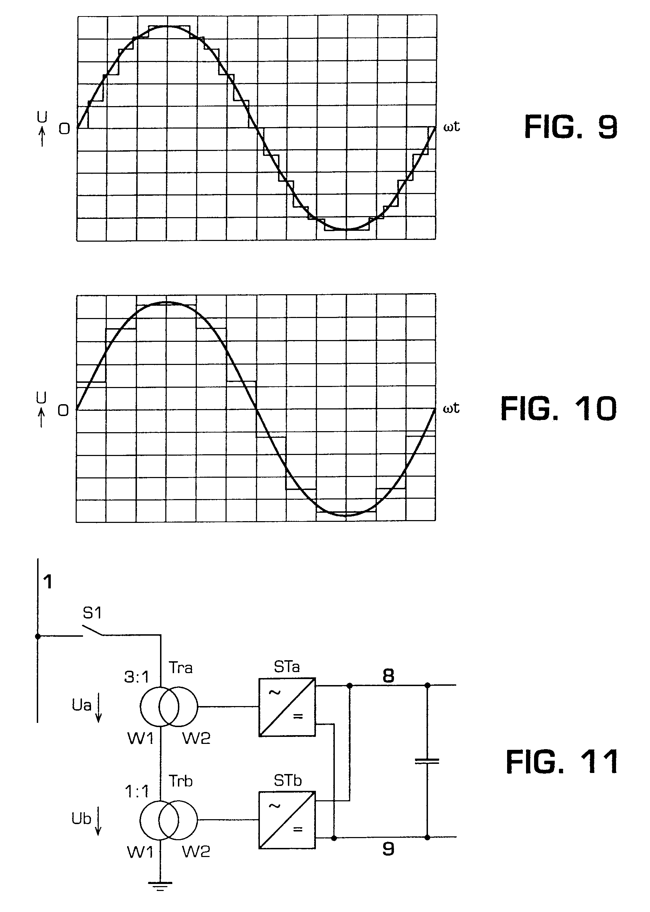

Die Teilstromrichter (ST1 - ST3) können im 3Punktbetrieb gemäss den Fig. 1 und 2 oder im 2Punktbetrieb, vgl. Fig. 11, betrieben werden, wobei in der Schaltung von Fig. 2 die Thyristoren (T1, T4, T5, T8) mit zugehörigen antiparallelen Dioden sowie die Nullpunktdioden (D0) entfallen.

Die Fig. 3a - 3d zeigen Spannungssignaldiagramme der Spannungen an den netzseitigen Wicklungen (W1) der Teiltransformatoren (Tr1 - Tr3) für 2Punktbetrieb der Teilstromrichter (ST1 - ST3), in denen auf der Abszisse die Zeit (t) in Einheiten von ω · t, ω= Kreisfrequenz, und auf der Ordinate Teilspannungen (U1 - U3) an den netzseitigen Wicklungen (W1) der Teiltransformatoren (Tr1 - Tr3) bzw. eine Summenspannung (U) aufgetragen sind. Die Spannungsstufen sind jeweils um 30°el. gegenseitig in der Phase verschoben, wobei die Amplitude der Teilspannung (U2) das √3fache derjenigen der beiden anderen Teilspannungen (U1, U3) beträgt.

Fig. 4 zeigt die der Summenspannung (U) gemäss Fig. 3d zugeordnete Addition der Spannungszeiger.

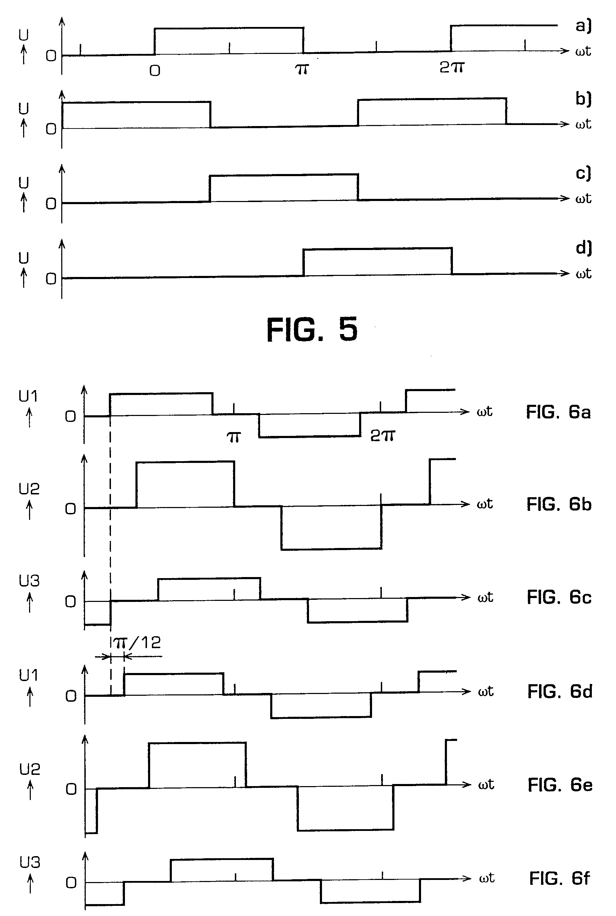

Die Fig. 5a - 5d zeigen Zündimpulsmuster für die GTO-Thyristoren (T2, T3, T6, T7) zur Erzeugung der Spannungsformen der Fig. 3a durch den Teilstromrichter (ST1). Die Fig. 5a und 5d zeigen Einschaltdauern der Thyristoren (T2) bzw. (T3), während die Fig. 5b und 5c um 120° phasenverschobene Einschaltdauern der Thyristoren (T6) bzw. (T7) darstellen. Die Thyristoren (T2) und (T3) bzw. (T6) und (T7) werden immer abwechselnd gezündet. Bei symmetrischer Zündung und ideal glatter Gleichspannung ist die erzeugte Ausgangswechselspannung frei von geradzahligen Oberschwingungen. Durch dieses Zündimpulsmuster ergeben sich 120°-Rechteckblöcke der Stromrichterwechselspannung, die frei von Harmonischen der Ordnungszahl 3, 9, 15 usw. sind, d. h. frei von Harmonischen, die durch 3 teilbar sind.

Die Teilspannungen (U1 - U3) der Teiltransformatoren (Tr1 - Tr3) sind um 30°el. gegeneinander versetzt, so dass sich mit dem genannten Transformatorübersetzungsverhältnis gerade 12Pulsigkeit ergibt, vgl. die Fig. 3a - 3c und Fig. 10 mit einer Computersimulation, bei welcher eine Fourieranalyse die niedrigsten Amplituden für die 11. und 13. Harmonische liefert.

Die Fig. 6a - 6c zeigen Spannungssignaldiagramme eines 1. Stromrichtersystems, entsprechend Fig. 1, und Fig. 6d - 6f solche eines 2. gleichen Stromrichtersystems, das gegenüber dem 1. Stromrichtersystem um 15°el. phasenverschoben ist, beide ohne Nullpunktdioden (D0). Durch diese Verdoppelung erhält man quasi eine 24pulsige Rückwirkung, vgl. die Computersimulation in Fig. 9.

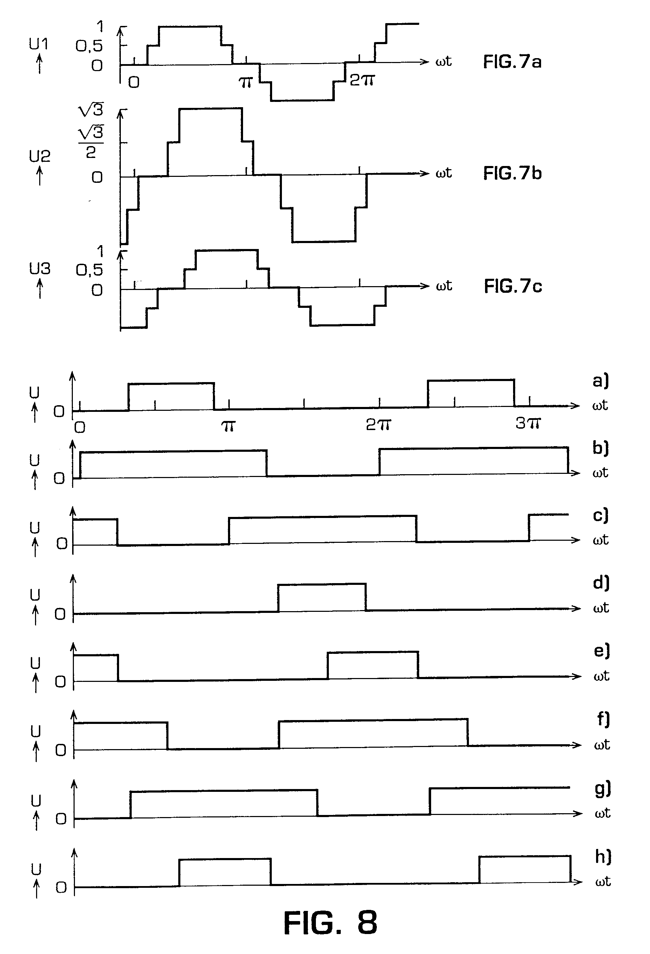

Die Fig. 7a - 7c zeigen Spannungssignaldiagramme der 3 Teiltransformatoren (Tr1 -Tr3) bei einem 3Punktbetrieb der 3 angeschlossenen Teilstromrichter (ST1 - ST3) gemäss den Fig. 1 und 2. Im 3Punktbetrieb werden abwechselnd die Potentiale +, 0 und - der Gleichspannungsseite durchgeschaltet. Mit diesem zusätzlichen Freiheitsgrad ist es also mit Teilstromrichtern (ST1 - ST3) gemäss Fig. 1 möglich, die gleiche 24Pulsigkeit wie mit 2 Teilsystemen im 2Punktsystem gemäss den Fig. 6a - 6f zu erreichen.

Die Fig. 8a - 8h zeigen das hierzu erforderliche Zündimpulsmuster für die GTO-Thyristoren (T1 - T8) für einen Teilstromrichter (ST1 - ST3). Eine Fourieranalyse der Gesamtspannung im 3Punktbetrieb ergibt eine Reduktion der 11. und 13. Harmonischen auf ca. 13 % des Wertes, der bei einem 12Pulsbetrieb erreicht wird.

Durch die Erzeugung von Stromblöcken abwechselnder Polarität mit einer Dauer von 120°el., die jeweils von stromlosen Abschnitten mit einer Dauer von jeweils 60°el. beabstandet sind, wird erreicht, dass alle durch 3 teilbaren Harmonischen eliminiert werden.

Fig. 11 zeigt eine Stromrichterschaltung für 2Punktbetrieb mit nur 2 Teilstromrichtern (STa) und (STb), die wechselspannungsseitig an Teiltransformatoren (Tra) und (Trb) angeschlossen sind, welche an ihren netzseitigen Transformatorwicklungen (W1) Teilspannungen (Ua, Ub) erzeugen. Gleichspannungsseitig sind die Teilstromrichter (STa) und (STb) parallelgeschaltet. Das Übersetzungsverhältnis von netzseitiger Transformatorwicklung (W1) zu stromrichterseitiger Transformatorwicklung (W2) beträgt beim Teiltransformator (Tra) 3 : 1 und beim Teiltransformator (Trb) 1 : 1.

Die Fig. 12a und 12b zeigen Spannungssignaldiagramme der Teilspannungen (Ua) und (Ub), die mit einer Stromrichterschaltung gemäss Fig. 11 erstellt werden können. Fig. 12c zeigt das zugehörige Summensignaldiagramm, aus dem die erreichte 6Pulsigkeit ersichtlich ist.

Wollte man mit Teiltransformatoren (Tr1 - Tr3; Tra, Trb), die alle die gleiche Spannungsübersetzung aufweisen, und mit Teilstromrichtern (ST1 - ST3) mit 2Punktbetrieb eine 6Pulsigkeit der erzeugten Wechselspannung erreichen, so wären 3 Teilstromrichter erforderlich. Durch die Verwendung von Teiltransformatoren (Tr1 - Tr3; Tra, Trb) mit unterschiedlicher Übersetzung lassen sich also die Anzahl der Teilstromrichter und damit auch die Kosten verringern.

Die Fig. 13a und 13b zeigen Spannungssignaldiagramme der Teilspannungen (U1) und (U3), die mit einer Schaltung gemäss Fig. 1 erstellt werden können, wenn der Teiltransformator (Tr2) mit angeschlossenem Teilstromrichter (ST2) entfällt. Fig. 13c zeigt das zugehörige Summensignaldiagramm, aus dem die erreichte 6Pulsigkeit ersichtlich ist. Dabei wird der Teilstromrichter (ST3) mit 3 Potentialniveaus betrieben, was im Vergleich zu einem Stromrichter mit 2Punktbetrieb einen höheren Aufwand erfordert. Die Teilspannung (U3) mit einer Blockdauer von 60°el. ist gegenüber der Teilspannung (U1) mit einer Blockdauer von 180°el. um 60°el. in der Phase verschoben.

Fig. 14 zeigt ein Spannungssignaldiagramm mit einer optimalen Treppenkurve von 5 Spannungsstufen. Die mittels einer nicht dargestellten Netzkupplung mit 5 Teilstromrichtern und 5 Teiltransformatoren erzeugte Treppenkurve sollte so verlaufen, dass sie möglichst gut einer Sinuskurve (10) angenähert ist. Mit (αᵢ) ist der Zündwinkel bzw. die phasenverschiebung einer i. Stufe bzw. eines i. Teilstromrichters und mit (Sᵢ) eine i. Stufenhöhe bzw. netzseitige Transformatorteilspannung bezeichnet. Eine unterhalb der Sinuskurve (10) liegende, schraffiert dargestellte Stufenfläche ist mit (Fu) bezeichnet und eine oberhalb der Sinuskurve (10) liegende, ebenfalls schraffiert dargestellte Stufenfläche mit (Fo). Die Stufen sind so zu wählen, dass die Summenfläche der unterhalb der Sinuskurve (10) liegenden Stufenflächen (Fu) gleich der Summenfläche der oberhalb der Sinuskurve (10) liegenden Stufenflächen (Fo) wird. In Bereichen mit einem steileren Anstieg der Sinuskurve sollte die Stufenhöhe (Sᵢ) grösser sein als in Bereichen mit kleinerem Anstieg; d. h., es ist Sᵢ proportional zu cos αᵢ zu wählen.

Die Erfindung eignet sich auch für statische Kompensatoren zur Kompensation von Blindleistung z. B. in der Schaltung gemäss Fig. 11.

### BEZEICHNUNGSLISTE

- 1: Bahnnetz, 1Phasennetz, Wechselstromnetz
- 2, 4, 6: Hochpassfilter
- 3: Gleichspannungszwischenkreis
- 5: Zwischenkreisdrossel
- 7: Landesnetz, 3Phasennetz
- 8: Pluspol von 3, Gleichspannungsleitung
- 9: Minuspol von 3, Gleichspannungsleitung
- 10: Sinuskurve
- C1, C2: Zwichenkreiskondensatoren
- D0: Nullpunktdiode
- Fu, Fo: Stufenflächen unterhalb/oberhalb der Sinuskurve
- P0: Nullpol
- S1 - S4: Schalter
- Sᵢ: i. Stufenhöhe
- ST1 - ST3, STa, STb: Stromrichter, 4Quadrantensteller, Teilstromrichter
- ST4, ST5: Stromrichter
- t: Zeit
- Tr1 - Tr3, Tra, Trb: Netztransformatoren, Teiltransformatoren, 2Wicklungstransformatoren
- Tr4: Netztransformator, 3Wicklungstransformator
- T1 - T8: GTO-Thyristoren
- U: Spannung, Summenspannung
- U1 - U3; Ua, Ub: Teilspannungen an Tr1 - Tr3; Tra, Trb
- W1: netzseitige Transformatorwicklung
- W2: stromrichterseitige Transformatorwicklung
- αᵢ: Zündwinkel bzw. Phasenverschiebung eines i. Teilstromrichters
- ω: Kreisfrequenz der Netz-Wechselspannung

## Patentansprüche

1. Verfahren zur Dämpfung mindestens einer Oberschwingung zur Netzfrequenz in einem Wechselspannungsnetz (1),
a) das über mindestens eine Stromrichterschaltung (ST1 - ST3; STa, STb) mit einer Gleichspannungsleitung (8, 9) in Wirkverbindung steht,
b) wobei die Stromrichterschaltung (ST1 - ST3; STa, STb) mindestens 2 Teilstromrichter (ST1 - ST3; STa, STb) aufweist, welche gleichspannungsseitig parallel- und wechselspannungsseitig über mindestens 2 Teiltransformatoren (Tr1 - Tr3; Tra, Trb) in Reihe geschaltet sind,
c) wobei durch phasenverschobene Taktungen der Teilstromrichter (ST1 - ST3; STa, STb) Rechteckspannungen bzw. Teilspannungen (U1 - U3; Ua, Ub) in netzseitigen Transformatorwicklungen (W1) der Teiltransformatoren (Tr1 - Tr3; Tra, Trb) erzeugt werden, die in ihrer Summenwirkung einen treppenförmigen Spannungsverlauf bzw. eine Summenspannung (U) ergeben, deren Verlauf demjenigen einer Sinuskurve (10) angenähert ist,
d) wobei die Stufenhöhen (Sᵢ) mindestens 2er Teilspannungen (U1 - U3; Ua, Ub) unterschiedlich gross sind
dadurch gekennzeichnet,
e) dass die Summenspannung (U) aus Stromblöcken abwechselnder Polarität von jeweils 120°el. gebildet wird, die jeweils von stromlosen Abschnitten von jeweils 60°el. beabstandet sind (Fig. 7a - 7c).

2. Verfahren nach Anspruch 1, dadurch gekennzeichnet, dass das Wechselspannungsnetz (1) einphasig ist.

3. Verfahren nach Anspruch 1 oder 2, dadurch gekennzeichnet, dass die Stufenhöhen (Sᵢ) in der Summenspannung (U) wenigstens annähernd proportional zur Steilheit der Sinuskurve (10) sind, derart, dass die Stufenhöhe (Sᵢ) im Bereich einer kleineren Steilheit der Sinuskurve (10) kleiner ist als die Stufenhöhe (Sᵢ) im Bereich einer grösseren Steilheit der Sinuskurve (10) (Fig. 14).

4. Verfahren nach einem der Ansprüche 1 bis 3, dadurch gekennzeichnet, dass die Phasenverschiebung (αᵢ) einer Teilspannung (U1 - U3; Ua, Ub) und die zugehörige Stufenhöhe (Sᵢ) so gewählt sind, dass die Summenfläche von unterhalb der Sinuskurve (10) liegenden Stufenflächen (Fu) wenigstens annähernd gleich der Summenfläche von Stufenflächen (Fo) oberhalb der Sinuskurve (10) ist.

5. Verfahren nach Anspruch 1 oder 2, dadurch gekennzeichnet,
a) dass die Stufenhöhe einer 1. Teilspannung (Ua) gleich der 3fachen Stufenhöhe einer 2. Teilspannung (Ub) ist,
b) dass die 1. Teilspannung (Ua) aus aufeinanderfolgenden Stromblöcken von 180°el. abwechselnder Polarität und
c) dass die 2. Teilspannung (Ub) aus aufeinanderfolgenden Stromblöcken von 60°el. abwechselnder Polarität gebildet wird sowie
d) dass die Phasen der 1. und 2. Teilspannung (Ua, Ub) so gewählt sind, dass sie am Spannungsnulldurchgang der Summenspannung (U) mit einer entgegengesetzten Polarität beginnen (Fig. 12).

6. Verfahren zur Dämpfung mindestens einer Oberschwingung zur Netzfrequenz in einem Wechselspannungsnetz (1) mit den Merkmalen a) bis c) des Anspruchs 1,
dadurch gekennzeichnet,
d) dass die Stufenhöhe einer 1. Teilspannung (U1) gleich der Stufenhöhe einer 2. Teilspannung (U3) ist,
e) dass die 1. Teilspannung (U1) aus aufeinanderfolgenden Stromblöcken von 180°el. abwechselnder Polarität gebildet wird,
f) dass die 2. Teilspannung (U3) aus aufeinanderfolgenden Stromblöcken von 60°el. abwechselnder Polarität gebildet wird, welche Stromblöcke von stromlosen Abschnitten einer Dauer von 120°el. beabstandet sind, und
g) dass die 2. Teilspannung (U3) bezüglich der 1. Teilspannung (U1) um 60°el. in der Phase verschoben ist (Fig. 13).

7. Netzkupplung
a) mit einer Stromrichterschaltung, die mindestens 2 Teilstromrichter (ST1 - ST3; STa, STb) aufweist, welche gleichspannungsseitig parallel- und wechselspannungsseitig über mindestens 2 Teiltransformatoren (Tr1 - Tr3; Tra, Trb) in Reihe geschaltet sind,
b) wobei mindestens 2 der in Reihe geschalteten Teiltransformatoren (Tr1 - Tr3; Tra, Trb) unterschiedliche Spannungsübersetzungen aufweisen,
dadurch gekennzeichnet,
c) dass 3 Teiltransformatoren (Tr1 - Tr3) in Reihe geschaltet sind, von denen einer (Tr2) eine Spannungsübersetzung bzw. ein Übersetzungsverhältnis von netzseitiger Transformatorwicklung (W1) zu stromrichterseitiger Transformatorwicklung (W2) aufweist, die gleich dem √3fachen der Spannungsübersetzung mindestens eines anderen Teiltransformators (Tr1, Tr3) ist.

8. Netzkupplung nach Anspruch 7, dadurch gekennzeichnet, dass die Teiltransformatoren (Tr1 - Tr3) an ein Wechselspannungsnetz (1) angeschlossen sind.

9. Netzkupplung nach Anspruch 3 oder 4, dadurch gekennzeichnet, dass die Teilstromrichter (ST1 - ST3) in 3Punktschaltung ausgeführt sind.
